# EUROPÄISCHE PATENTANMELDUNG

(11) **EP 1 380 344 A1**
(43) Veröffentlichungstag der Anmeldung: **14.01.2004**
(21) Anmeldenummer: 03014912.4
(22) Anmeldetag: 01.07.2003
(51) Int. Cl.: B01J 39/20, C08F 8/32

(54) **Verfahren zur Herstellung von gelförmigen Kationenaustauschern**

(30) Priorität: 08.07.2002 US 191386
(71) Anmelder: Bayer Chemicals AG, 51368 Leverkusen (DE); SYBRON CHEMICALS INC, Birmingham New Jersey 08011 (US)
(72) Erfinder: Podszun, Wolfgang, Dr., 51061 Köln (DE); Klipper, Reinhold, Dr., 50933 Köln (DE); Dimotsis, George, L., Lansdale, PA 19446 (US); Schnegg, Ulrich, Dr., 51377 Leverkusen (DE)
(74) Vertreter: Wichmann, Birgid, Dr. (DE)

(57) **Zusammenfassung**

Vernetzte (meth)acrylesterhaltige Perlpolymerisate, lassen sich durch Sulfonierung mit Schwefelsäure einer Konzentration von 90 bis 95 % in Abwesenheit eines Quellungsmittels in gelförmige Kationenaustauscher mit hoher Stabilität überführen.

## Beschreibung

Die Erfindung betrifft ein Verfahren zur Herstellung von stark sauren gelförmigen Kationenaustauschem mit hoher Stabilität durch quellungsmittelfreie Sulfonierung (meth)acrylesterhaltiger Perlpolymerisate.

Kationenaustauscher lassen sich durch Funktionalisieren von vemetzten Styrol-Perlpolymerisaten erhalten. Bei der Funktionalisierung werden durch Reaktion aromatischer Einheiten des Polymergerüstes mit einem Sulfonierungsmittel, wie z.B. Schwefelsäure kovalent gebundene Sulfonsäuregruppen erzeugt.

Die Reaktion des Perlpolymerisates mit dem Sulfonierungsmittel ist wegen der unterschiedlichen Polarität von Perlpolymerisat und Sulfonierungsmittel behindert oder stark verlangsamt. Aus diesem Grunde wird im Allgemeinen zur Verbesserung der Reaktionskinetik ein Quellungsmittel zugesetzt. Geeignet sind in diesem Zusammenhang in erster Linie chlorhaltige Quellungsmittel wie Dichlormethan, Dichlorethan oder Dichlorpropan.

Die Verwendung chlorhaltiger Verbindungen als Quellungsmittel bei der Sulfonierung ist aus wirtschaftlichen und besonders aus ökologischen Gründen unerwünscht.

Es hat nicht an Versuchen gefehlt, Perlpolymerisate bereitzustellen, die ohne Zusatz von Quellungsmitteln zu stark sauren Kationenaustauschem sulfoniert werden können. So beschreiben die DE-AS 1 233 143 und DE-AS 1 227 431 acrylnitrilhaltige Perlpolymerisate für die quellungsmittelfreie Sulfonierung. Allerdings ist die Verwendung von Acrylnitril als Comonomer aus ökologischen und toxikologischen Gründen weniger günstig.

Aus der US-A 4 500 652 ist ein Verfahren zur Herstellung von Kationenaustauschem bekannt, bei dem Suspensionspolymerisate aus Styrol, Divinylbenzol und (Meth)-acrylsäure bzw. (Meth)acrylsäurealkylester quellungsmittelfrei sulfoniert werden. Allerdings erfordert das beschriebene Verfahren als Sulfonierungsmittel Schwefelsäure mit einer Konzentration von 95 bis 100%. Die Verwendung von Schwefelsäure dieser hohen Konzentration ist ungünstig, weil die Wiederverwendung der bei der Sulfonierung anfallenden Abfallschwefelsäure, die naturgemäß eine erniedrigte Konzentration aufweist, stark eingeschränkt ist. Ein weiterer Nachteil besteht in der isothermen Temperaturführung von beispielsweise 5 Stunden bei 100°C, die einen hohen regelungstechnischen Aufwand und hohen Energieverbrauch erfordert. Außerdem ist der Anteil an gebrochenen Perlen bei Produkten gemäss US-A 4 500 652 mit 5 bis 10 % beträchtlich.

Ein Problem der bekannten Kationenaustauscher besteht in ihrer nicht immer ausreichenden Stabilität bei Beanspruchung. So können Kationenaustauscherperlen durch mechanische oder osmotische Kräfte zerbrechen. Für alle Anwendungen von Kationenaustauschern gilt, dass diese in Perlform vorliegend ihren Habitus behalten müssen und nicht während der Anwendung teilweise oder auch gänzlich abgebaut werden oder in Bruchstücke zerfallen dürfen. Bruchstücke und Perlpolymerisatsplitter können während der Reinigung in die zu reinigenden Lösungen gelangen und diese selbst verunreinigen. Ferner ist das Vorhandensein von geschädigten Perlpolymerisaten für die Funktionsweise der in Säulenverfahren eingesetzten Kationenaustauscher selbst ungünstig. Splitter führen zu einem erhöhten Druckverlust des Säulensystems und vermindern damit den Durchsatz an zu reinigender Flüssigkeit durch die Säule.

Die Aufgabe der vorliegenden Erfindung ist deshalb die Bereitstellung eines einfachen, robusten und wirtschaftlichen Verfahrens zur Herstellung gelförmiger Kationenaustauscher mit hoher Stabilität.

Die Lösung der Aufgabe und Gegenstand der vorliegenden Erfindung ist ein Verfahren zur Herstellung von gelförmigen Kationenaustauschern mit hoher Stabilität durch quellungsmittelfreie Sulfonierung (meth)acrylesterhaltiger vernetzter Perlpolymerisate, dadurch gekennzeichnet, dass die Sulfonierung mit einer Schwefelsäure der Konzentration von 90 bis 95 Gew.-% durchgeführt wird, wobei die Temperatur während der Sulfonierung durch die auftretende Reaktionswärme und/oder Verdünnungswärme gesteigert wird und nach Durchlaufen des Temperaturgradienten eine Endtemperatur von 150 bis 170°C erreicht wird.

Erfindungsgemäß geeignete (meth)acrylesterhaltige vernetzte Perlpolymerisate sind Copolymerisate aus Styrol, Divinylbenzol und (Meth)acrylester.

Unter (Meth)acrylester im Sinne der vorliegenden Erfindung werden die Ester der Acrylsäure oder Methacrylsäure verstanden. Erfindungsgemäß bevorzugt werden Alkyl- oder Hydroxyalkylester mit 1 bis 4 C-Atomen. Besonders bevorzugte (Meth)-acrylester sind Methylacrylat, Ethylacrylat, n-Propylacrylat, i-Propylacrylat, Hydroxyethylacrylat, Hydroxypropylacrylat, Methylmethacrylat, Ethylmethacrylat, Hydroxyethylmethacrylat oder Hydroxypropylmethacrylat. Insbesondere bevorzugt wird Methylacrylat eingesetzt.

Der Anteil an copolymerisiertem Divinylbenzol im Perlpolymerisat beträgt 2 bis 20 Gew.-%, vorzugsweise 4 bis 12 Gew.-%, besonders bevorzugt 6 bis 10 Gew.-%. Zur Herstellung des Perlpolymerisates können technische Qualitäten von Divinylbenzol eingesetzt werden, die neben den Isomeren des Divinylbenzols übliche Nebenprodukte wie Ethylvinylbenzol enthalten. Erfindungsgemäß sind technische Qualitäten mit Divinylbenzolgehalten von 55 bis 85 Gew.-% besonders gut geeignet.

(Meth)acrylester ist in copolymerisierter Form in Mengen von 1 bis 8 Gew.-%, vorzugsweise 2 bis 6 Gew.-% im Perlpolymerisat enthalten.

Die Herstellung der erfindungsgemäß geeigneten Perlpolymerisate erfolgt nach der bekannten Methode der Suspensionspolymerisation. Hierbei wird das Gemisch aus Styrol, Divinylbenzol und (Meth)acrylester mit mindestens einem Radikalbildner versetzt in einer wässrigen Phase, die ein Dispergiermittel enthält, unter Rühren zu Tröpfchen zerteilt und bei erhöhter Temperatur ausgehärtet.

In einer besonderen Ausführungsform der vorliegenden Erfindung wird ein Perlpolymerisat eingesetzt, bei dessen Herstellung ein Gemisch aus Radikalstarter unterschiedlicher Zerfallstemperaturen verwendet wurde. Gut geeignet sind beispielsweise Mischungen aus Dibenzoylperoxid oder tert.-Butylperoxybenzoat oder Mischungen aus tert.-Butylperoxy-2-ethylhexanoat und tert.-Butylperoxybenzoat. Dabei ist es besonders vorteilhaft, die Polymerisationstemperatur mit fortlaufendem Polymerisationsumsatz zu steigern, beispielsweise von einer Anfangstemperatur von 60 bis 70°C auf eine Endtemperatur von 90 bis 150°C.

In einer weiteren besonderen Ausführungsform der vorliegenden Erfindung wird ein Perlpolymerisat eingesetzt, bei dessen Herstellung ein wasserlösliches Cellulosederivat als Dispergiermittel eingesetzt wird. Sehr gut geeignet sind Celluloseester oder Celluloseether, wie Carboxymethylcellulose, Hydroxyethylcellulose oder Hydroxyethylmethycellulose. Die Einsatzmenge des Cellulosederivats beträgt im allgemeinen 0,05 bis 1 % bezogen auf die Wasserphase, vorzugsweise 0,1 bis 0,5 %.

Die Teilchengröße des Perlpolymerisates beträgt 100 bis 1000 um, vorzugsweise 200 bis 500 µm. Es können sowohl Perlpolymerisate mit einer breiten Teilchengrößenverteilung als auch solche mit einer engen Teilchengrößenverteilung bzw. monodisperse Perlpolymerisate verwendet werden. Monodispers im Sinne der vorliegenden Erfindung bedeutet, dass der Quotient aus dem 90 %-Wert und dem 10 %-Wert der Volumenverteilungsfunktion weniger als 2, bevorzugt weniger als 1,5, besonders bevorzugt weniger als 1,25 beträgt.

Die erfindungsgemäß als Edukt einzusetzenden Perlpolymerisate können eine weitgehend homogene Netzwerkstruktur aufweisen. Erfindungsgemäß bevorzugt geeignet sind auch Perlpolymerisate mit einer sogenannten IPN-Struktur (Interpenetrating Network), die sich nach den aus dem Stand der Technik bekannten Saat-Zulauf-Verfahren erzeugen lassen.

Die Umsetzung der vernetzten Perlpolymerisate zu Kationenaustauschern erfolgt durch Sulfonierung. Als Sulfonierungsmittel wird dabei eine Schwefelsäure mit einer Konzentration von 90 bis 95 % verwendet. Es ist vorteilhaft, die notwendige Säurekonzentration durch Mischen von Schwefelsäure einer höheren und einer niedrigeren Konzentration einzustellen, wobei als Schwefelsäure mit niedrigerer Konzentration zurückgewonnene Schwefelsäure aus früheren Sulfonierungsreaktionen eingesetzt werden kann. Das Mischen der Schwefelsäure erfolgt vorzugsweise im Sulfonierungsreaktor in Anwesenheit des zu sulfonierenden Perlpolymerisats, so dass die auftretende Mischungswärme zum Aufheizen des Reaktionsgemisches genutzt wird.

Überraschenderweise wurde gefunden, dass die Temperaturführung bei der Sulfonierung wesentlich für die Erzielung des erfindungsgemäßen Effektes ist. Im erfindungsgemäßen Verfahren wird deshalb die Sulfonierung bei Temperaturen von 40 bis 120°C, vorzugsweise 50 bis 150°C gestartet und unter Ausnützung der Mischungswärme und/oder Reaktionswärme der Temperaturgradient durchlaufen bis eine Endtemperatur von 150 bis 170°C, vorzugsweise auf 155 bis 165°C erreicht wird.

Das Verhältnis von Schwefelsäure zu Perlpolymerisat beträgt 2,5 bis 5 ml/g, vorzugsweise 2,6 bis 4 ml/g, besonders bevorzugt 2,8 bis 3,5 ml/g.

Bei der Sulfonierung wird das Reaktionsgemisch gerührt. Dabei können verschiedene Rührertypen, wie Blatt-, Anker-, Gitter- oder Turbinenrührer eingesetzt werden.

Nach der Sulfonierung wird das Reaktionsgemisch aus Sulfonierungsprodukt und Restsäure auf Raumtemperatur abgekühlt und zunächst mit Schwefelsäuren abnehmender Konzentrationen und dann mit Wasser verdünnt.

Falls gewünscht kann der erfindungsgemäß erhaltene Kationenaustauscher in der H-Form zur Reinigung mit entionisiertem Wasser bei Temperaturen von 70 bis 180°C, vorzugsweise von 105 bis 130°C behandelt werden.

Für viele Anwendungen ist es günstig, den erfindungsgemäß hergestellten Kationenaustauscher von der sauren Form in die Natrium-Form zu überführen. Diese Umladung erfolgt mit Natronlauge einer Konzentration von 2 bis 60 Gew.-%, vorzugsweise 4 bis 10 Gew.-% oder mit wässrigen Natriumchloridlösungen, die 1 bis 25 gew.-%ig, bevorzugt 4 bis 10 Gew.-% an Natriumchlorid sind.

Nach der Umladung können die Kationenaustauscher zur weiteren Reinigung mit entionisiertem Wasser oder wässrigen Salzlösungen, beispielsweise mit Natriumchlorid- oder Natriumsulfatlösungen, behandelt werden. Dabei wurde gefunden, dass die Behandlung bei 70 bis 150°C, vorzugsweise 120 bis 135°C besonders effektiv ist und keine Verringerung der Kapazität des Kationenaustauschers bewirkt.

Die vorliegende Erfindung betrifft aber auch die gelförmigen Kationenaustauscher mit hoher Stabilität erhältlich durch quellungsmittelfreie Sulfonierung (meth)acrylesterhaltiger vernetzter Perlpolymerisate, dadurch gekennzeichnet, dass die Sulfonierung mit einer Schwefelsäure der Konzentration von 90 bis 95 % durchgeführt wird, wobei die Temperatur während der Sulfonierung durch die auftretende Reaktionswärme und/oder Verdünnungswärme gesteigert wird und eine Endtemperatur von 150 bis 170°C erreicht wird.

Die nach dem erfindungsgemäßen Verfahren erhaltenen Kationenaustauscher zeichnen sich durch eine besonders hohe Stabilität aus. Sie zeigen auch nach längerem Gebrauch und vielfacher Regeneration keine Defekte an den Ionenaustauscherkugeln.

Für die erfindungsgemäßen Kationenaustauscher gibt es eine Vielzahl unterschiedlicher Anwendungen. So können sie beispielsweise bei der Trinkwasseraufbereitung, bei der Herstellung von Kraftwerkswasser und Reinstwasser (notwendig bei der Mikrochip-Herstellung für die Computerindustrie), zur chromatographischen Trennung von Zuckern, bevorzugt von Glucose oder Fructose und als Katalysatoren für verschiedene chemische Reaktionen (wie z. B. bei der Bisphenol-A-Herstellung aus Phenol und Aceton) eingesetzt werden.

In Tabelle 1 sind Kenndaten der in den Beispielen 2 bis 4 dargestellten Harze zusammengefasst.

**Tabelle 1**

| **Beispiel** | **Menge an Methylacrylat in Gew. % im Perlpolymerisat** | **% geschädigte Perlen im Originalzustand** | **% geschädigte Perlen nach Alkalisturz** |
|---|---|---|---|
| 2 | 3 | 1 | 1 |
| 3 | 3 | 2 | 2 |
| 4 | 3 | 3 | 4 |

### Untersuchungsmethoden:

### Originalstabilität Anzahl perfekter Perlen nach Herstellung

100 Perlen werden unter dem Mikroskop betrachtet. Ermittelt wird die Anzahl der Perlen, die Risse tragen oder Absplitterungen zeigen. Die Anzahl perfekter Perlen ergibt sich aus der Differenz der Anzahl beschädigter Perlen zu 100.

### Bestimmung der Stabilität von Kationenaustauschern durch Alkalisturz.

In einem 100 ml Becherglas werden 5 ml Kationenaustauscher in der H - Form vorgelegt. Bei Raumtemperatur werden 20 ml 50 gew.-%ige Natronlauge dosiert. Es wird umgerührt und über Nacht stehen gelassen. Dann wird hiervon eine repräsentative Probe genommen, auf eine Petrischale überführt und unter dem Mikroskop photographiert. Auf dem Photo werden 100 Perlen ausgezählt. Die Anzahl der perfekten, ungeschädigten Perlen von 100 werden gezählt.

### Beispiel 1

### Herstellung eines acrylesterhaltigen Perlpolymerisates

In einem 4 Liter-Planschliffgefaß verbunden mit einem Gitterrührer, Kühler, Temperaturfühler mit Thermostat und Schreiber wird die wässrige Phase bestehend aus
1119,04 g entionisiertem Wasser
125,00 g 2 %iger Methylhydroxyethylcellulose- Lösung und
5,69 g Na₂HPO₄ · 12H₂O vorgelegt.

Die Rührgeschwindigkeit wird auf 240U/ min eingestellt und damit die Vorlage gerührt.

Anschließend wird das vorbereitete Monomergemisch bestehend aus
1019,32 g Styrol
193,18 g 55 %igem Divinylbenzol
37,50 g Methylacrylat
3,75 g reinem Dibenzoylperoxyd und
3,75 g tert. Butylbenzoat
über einen verlängerten Trichter unterhalb der Oberfläche in den Reaktor eingetragen.

Es werden 15 Minuten mit 20 Liter/ h Stickstoff übergeleitet.

In 1,5 h wird auf 63°C geheizt und 9h bei 63°C gehalten. Dann wird in 1h auf 94°C hochgeheizt und die Temperatur für 2 h bei 94°C gehalten. Danach wird innerhalb von 2 h auf Raumtemperatur abgekühlt.

Der gesamte Ansatz wird in einen 6 Liter-Autoklav überführt und innerhalb von 3 h auf 130°C erhitzt, 2 h bei 130°C gehalten und danach wieder auf Raumtemperatur abgekühlt. Der Ansatz wird über ein 100µm - Sieb gründlich gewaschen und bei 80°C im Trockenschrank getrocknet.

Man erhält 93,4 % Ausbeute mit einer durchschnittlichen Teilchengröße von 470 µm.

### Beispiel 2

### Herstellung von Kationenaustauschern

### Quellungsmittelfreie Sulfonierung

### Apparatur:

### 1 Liter Doppelwandgefäß, Intensivkühler, Rührer, Thermoelement, programmierbarer Thermostat vom Typ Julabo

Im Reaktor werden 103,5 Gramm 78 gew.-%ige Schwefelsäure bei Raumtemperatur vorgelegt. Unter Rühren wird auf 80°C erhitzt. Dann werden 50 Gramm Perlpolymerisat aus Beispiel 1 in 2 Minuten dosiert. Anschließend werden 193 Gramm 100 %ige Schwefelsäure in 5 Minuten dosiert. Dabei ergibt sich eine Schwefelsäurekonzentration von 92 %. In einer Stunde lässt man die Temperatur auf 110°C ansteigen und rührt weitere 2 Stunden bei 110°C. Dann wird in einer Stunde die Temperatur auf 150°C gesteigert und weitere 4 Stunden bei 150°C gerührt. Anschließend wird in 2 Stunden auf Raumtemperatur abgekühlt. Das Produkt wird mit 78 gew.-%iger Schwefelsäure in eine Glassäule gespült. Dort werden in jeweils 15 Minuten je 2 Bettvolumen 78 gew.-%ige, 70 gew.-%ige, 55 gew.-%ige und 30 gew.-%iger Schwefelsäure über das Harz dosiert. Anschließend wird mit vollentsalztem Wasser gewaschen bis der Ablauf einen pH Wert von ca. 5 zeigt.

### Ausbeute H - Form : 230 ml

### Umladung des Harzes von der H- in die Na- Form

180 ml Harz in der H - Form werden mit Wasser in eine Säule gespült. Bei Raumtemperatur werden in 4 Stunden 800 ml 4 gew.-%ige Natronlauge darüber gegeben. Anschließend wird das Harz mit vollentsalztem Wasser von oben gewaschen bis der pH-Wert des abfließenden Wassers bei ca. 8 bis 9 liegt. Durch Klassieren werden noch vorhandene Feinanteile entfernt.
Ausbeute Na- Form : 174 ml
Originalstabilität:
Anzahl ganzer Perlen: 99 %
Anzahl gebrochener Perlen: 1 %
Alkalisturzstabilität
Anzahl ganzer Perlen: 99 %
Anzahl gebrochener Perlen: 1 %
   Totalkapazität Na- Form : 1,95 mol / 1

### Beispiel 3

### Herstellung von Kationenaustauschern

### Quellungsmittelfreie Sulfonierung

### Apparatur :

### 1 Liter Doppelwandgefäß, Intensivkühler, Rührer, Thermoelement, programmierbarer Thermostat vom Typ Julabo

Im Reaktor werden 103,5 Gramm 78 gew.-%ige Schwefelsäure bei Raumtemperatur vorgelegt. Unter Rühren wird auf 80°C erhitzt. Dann werden 50 Gramm Perlpolymerisat aus Beispiel 1 in 2 Minuten dosiert. Anschließend werden 193 Gramm 100 %ige Schwefelsäure in 5 Minuten dosiert. Dabei ergibt sich eine Schwefelsäurekonzentration von 92 %. In einer Stunde lässt man die Temperatur auf 110°C ansteigen und rührt weitere 2 Stunden bei 110°C. Dann wird in einer Stunde die Temperatur auf 155°C gesteigert und weitere 3 Stunden bei 155°C gerührt. Anschließend wird in 2 Stunden auf Raumtemperatur abgekühlt. Das Produkt wird mit 78 gew.-%iger Schwefelsäure in eine Glassäule gespült. Dort werden in jeweils 15 Minuten je 2 Bettvolumen 78 gew.-%ige, 70 gew.-%ige, 55 gew.-%ige und 30 gew.-%ige Schwefelsäure über das Harz dosiert. Anschließend wird mit vollentsalztem Wasser gewaschen bis der Ablauf einen pH-Wert von ca. 5 zeigt.

### Ausbeute H - Form : 230 ml

### Umladung des Harzes von der H - in die Na- Form

185 ml Harz in der H - Form werden mit Wasser in eine Säule gespült. Bei Raumtemperatur werden in 4 Stunden 800 ml 4 gew.-%ige Natronlauge übergegeben. Anschließend wird das Harz mit vollentsalztem Wasser von oben gewaschen bis der pH-Wert des abfließenden Wassers bei ca. 8 - 9 liegt. Durch Klassieren werden noch vorhandene Feinanteile entfernt.
Ausbeute Na- Form : 168 ml
Originalstabilität:
Anzahl ganzer Perlen: 98 %
Anzahl gebrochener Perlen: 2 %
Alkalisturzstabilität
Anzahl ganzer Perlen: 98 %
Anzahl gebrochener Perlen: 2 %
   Totalkapazität Na- Form : 2,02 mol /1

### Beispiel 4

### Herstellung von Kationenaustauschern

### Quellungsmittelfreie Sulfonierung

### Apparatur:

### 1 Liter Doppelwandgefäß, Intensivkühler, Rührer, Thermoelement, programmierbarer Thermostat vom Typ Julabo

Im Reaktor werden 103,5 Gramm 78 gew.-%ige Schwefelsäure bei Raumtemperatur vorgelegt. Unter Rühren wird auf 80°C erhitzt. Dann werden 50 Gramm Perlpolymerisat aus Beispiel 1 in 2 Minuten dosiert. Anschließend werden 193 Gramm 100 %ige Schwefelsäure in 5 Minuten dosiert. Dabei ergibt sich eine Schwefelsäurekonzentration von 92 %. In 1 Stunde lässt man die Temperatur auf 110°C ansteigen und rührt weitere 2 Stunden bei 110°C. Dann wird in einer Stunde die Temperatur auf 160°C gesteigert und weitere 2,5 Stunden bei 160°C gerührt. Anschließend wird in 2 Stunden auf Raumtemperatur abgekühlt. Das Produkt wird mit 78 gew.-%iger Schwefelsäure in eine Glassäule gespült. Dort werden in jeweils 15 Minuten je 2 Bettvolumen 78 gew.-%ige, 70 gew.-%ige, 55 gew.-%ige und 30 gew.-%ige Schwefelsäure über das Harz dosiert. Anschließend wird mit vollentsalztem Wasser gewaschen bis der Ablauf einen pH-Wert von ca. 5 zeigt.
Ausbeute H - Form : 237 ml

### Umladung des Harzes von der H - in die Na- Form

180 ml Harz in der H - Form werden mit Wasser in eine Säule gespült. Bei Raumtemperatur werden in 4 Stunden 800 ml 4 gew.-%ige Natronlauge übergegeben. Anschließend wird das Harz mit vollentsalztem Wasser von oben gewaschen bis der pH-Wert des abfließenden Wassers bei ca. 8 bis 9 liegt. Durch Klassieren werden noch vorhandene Feinanteile entfernt.
Ausbeute Na- Form : 168 ml
Originalstabilität:
Anzahl ganzer Perlen: 97 %
Anzahl gebrochener Perlen: 3 %
Alkalisturzstabilität
Anzahl ganzer Perlen: 96 %
Anzahl gebrochener Perlen: 4 %
Totalkapazität Na- Form : 1,99 mol / 1

## Patentansprüche

1. Verfahren zur Herstellung von gelförmigen Kationenaustauschern mit hoher Stabilität durch quellungsmittelfreie Sulfonierung (meth)acrylesterhaltiger vernetzter Perlpolymerisate, **dadurch gekennzeichnet, dass** die Sulfonierung mit einer Schwefelsäure der Konzentration von 90 bis 95 % durchgeführt wird, wobei die Temperatur während der Sulfonierung durch die auftretende Reaktionswärme und/oder Verdünnungswärme gesteigert wird und nach Durlaufen des Temperaturgradienten eine Endtemperatur von 150 bis 170°C erreicht wird.

2. Verfahren nach Anspruch 1, **dadurch gekennzeichnet, dass** die Sulfonierung bei einer Temperatur von 40 bis 120°C gestartet wird und die Endtemperatur ohne externes Aufheizen unter Ausnutzung der Mischungswärme und/oder Reaktionswärme erreicht wird.

3. Verfahren nach Anspruch 1 oder 2, **dadurch gekennzeichnet, dass** die Schwefelsäurekonzentration von 90 bis 95 % durch Mischen von Schwefelsäure einer höheren und einer niedrigeren Konzentration im Sulfonierungsreaktor erfolgt, wobei die auftretende Mischungswärme zum Aufheizen des Reaktionsgemisches genutzt wird.

4. Gelförmige Kationenaustauscher mit hoher Stabilität erhältlich durch quellungsmittelfreie Sulfonierung (meth)acrylesterhaltiger vernetzter Perlpolymerisate, **dadurch gekennzeichnet, dass** die Sulfonierung mit einer Schwefelsäure der Konzentration von 90 bis 95 % durchgeführt wird, wobei die Temperatur während der Sulfonierung durch die auftretende Reaktionswärme und/oder Verdünnungswärme gesteigert wird und eine Endtemperatur von 150 bis 170°C erreicht wird.

5. Verwendung der gelförmigen Kationenaustauscher gemäß Anspruch 4 zur Trinkwasseraufbereitung, bei der Herstellung von Kraftwerkswasser und Reinstwasser, zur chromatographischen Trennung von Zuckern, bevorzugt von Glucose oder Fructose und als Katalysatoren für verschiedene chemische Reaktionen bevorzugt der Bisphenol-A-Herstellung aus Phenol und Aceton.
